# EUROPEAN PATENT SPECIFICATION

(11) **EP 3 912 771 B1**
(45) Date of publication and mention of the grant of the patent: **28.06.2023**
(21) Application number: 21172866.2
(22) Date of filing: 07.05.2021
(51) Int. Cl.: B25J 15/00, B25J 15/06

(54) **VACUUM GRIPPER FOR THE SELECTIVE PICKING-UP OF OBJECTS WITH VARIOUS SHAPES**
VAKUUMGREIFER ZUM SELEKTIVEN AUFNEHMEN VON GEGENSTÄNDEN MIT UNTERSCHIEDLICHEN FORMEN
PRÉHENSEUR À SUCCION POUR LA CAPTURE SÉLECTIVE D'OBJETS DE DIVERSES FORMES

(30) Priority: 19.05.2020 IT 202000011647
(43) Date of publication of application: 24.11.2021
(73) Proprietor: Duepi S.r.l., 60027 Osimo (AN) (IT)
(72) Inventor: PETTARELLI, Daniele, 62011 Cingoli (MC) (IT)
(74) Representative: Cutropia, Gianluigi

(56) References cited:
- JP-A- 2009 072 850

## Description

The present invention relates to a vacuum gripper for the selective picking-up of objects with various shapes, and especially for the picking-up of strips of a flexible cut sheet material, such as strips of leather and the like.

EP2720838 discloses a device comprising a removing group with a plate provided with holes that are connected selectively either to an aspirating source or a compressed air source. The plate is disposed on a strip wherein a cut portion to be removed is arranged. Air is aspirated in the holes in correspondence of the cut portion to be removed, and is simultaneously ejected from the peripheral holes in correspondence of the contour of strip wherein the portion to be removed is cut, in such a way to facilitate the detachment of the portion to be removed from the strip. Such a system used for extracting and ejecting the air from the plate is not particularly efficient, precise or reliable.

JP2009072850 discloses a vacuum gripper according to the preamble of the independent claim 1.

The purpose of the present invention is to eliminate the drawbacks of the prior art by providing a vacuum gripper for the selective picking up of objects that is efficient, accurate and reliable.

Another object of the present invention is to provide such a vacuum gripper for the selective picking up of objects that is versatile and suitable for the picking up of objects with a complex shape and/or objects that are made of flexible material.

Another object of the present invention is to provide such a vacuum gripper for the selective picking up of objects that is multi-functional and suitable for stacking objects with complex shape and/or objects made of a flexible material.

It is a further object of the present invention to provide such a vacuum gripper for the selective picking up of objects that is provided with an activation/deactivation system of the suction cups that is reliable, efficient and rapid.

These purposes are achieved according to the invention with the characteristics of the independent claim 1.

Advantageous embodiments of the invention appear from the dependent claims.

The vacuum gripper according to the invention is defined by claim 1.

Additional features of the invention will be clearer from the following detailed description, which refers to a merely illustrative, not limiting embodiment, which is shown in the appended figures, wherein:
Fig. 1 is a perspective top view of the vacuum gripper according to the invention;
Fig. 2 is a sectional view of the gripper of Fig. 1 ;
Fig. 2A is an enlarged view of a detail enclosed in the circle A of Fig. 2;
Fig. 3 is the same view as Fig. 1, partially sectioned;
Fig. 3A is an enlarged view of a portion of Fig. 3;
Fig. 3B is an enlarged view of a portion of Fig. 3 that shows a valve of a manifold in opening extraction configuration;
Fig. 3C is the same view as Fig. 3B that shows a valve of a manifold in closing extraction configuration;
Fig. 4 is the same view as Fig. 3, but with a different inclination;

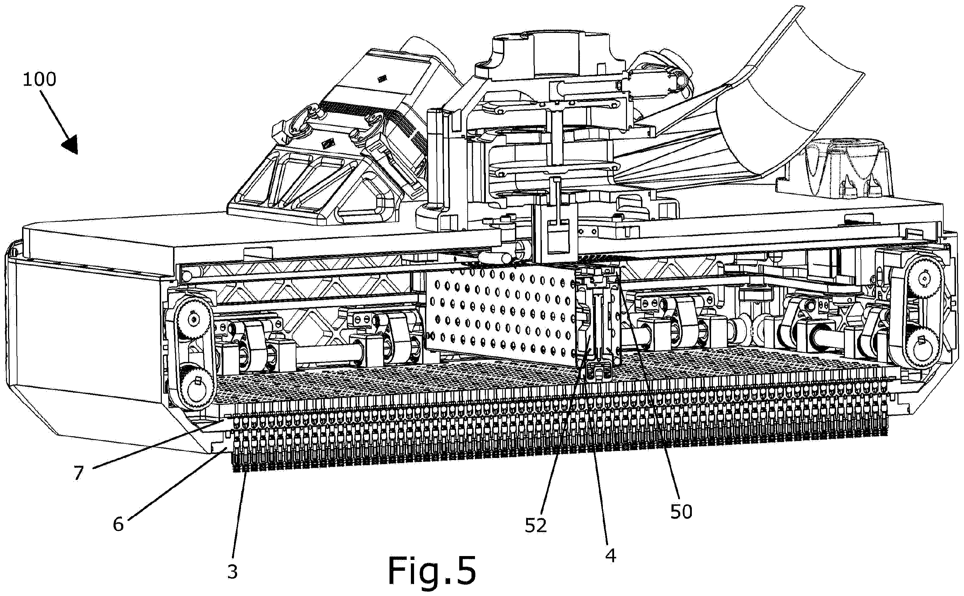

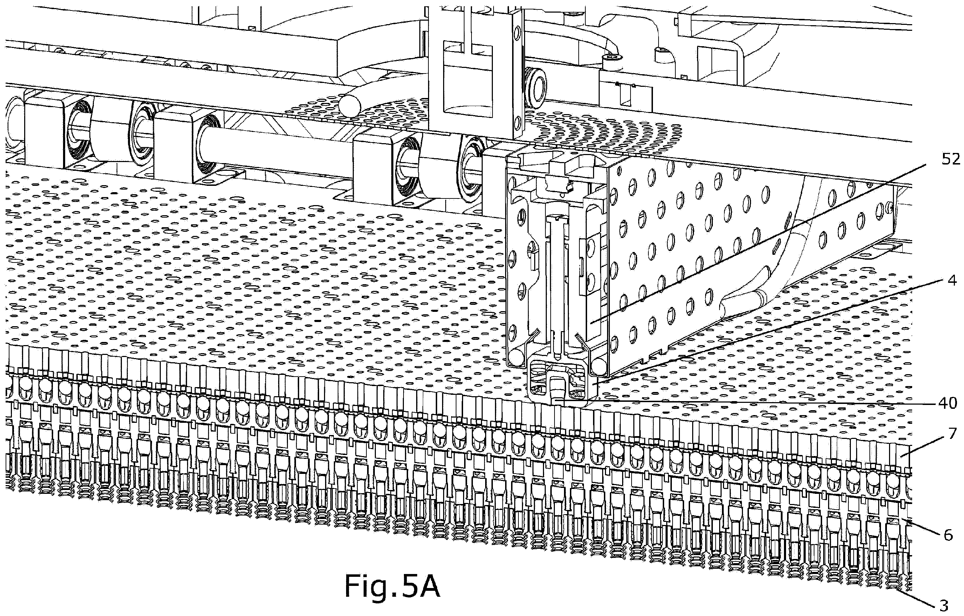

Fig. 5 is the same view as Fig. 3 wherein the blowing head of the gripper is in advanced position;
Fig. 5A is an enlarged view of a portion of Fig. 5;
Figs. 6A to 6F are five sectional views that show the operating steps of the gripper according to the invention.

With reference to the Figures, the gripper according to the invention is disclosed, which is generally indicated with reference numeral (100).

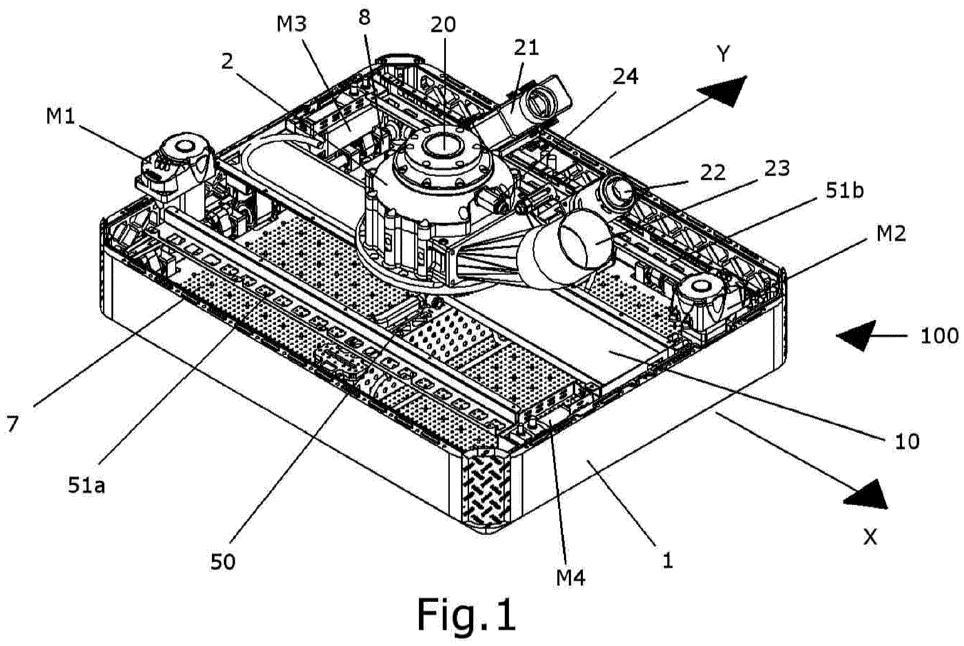

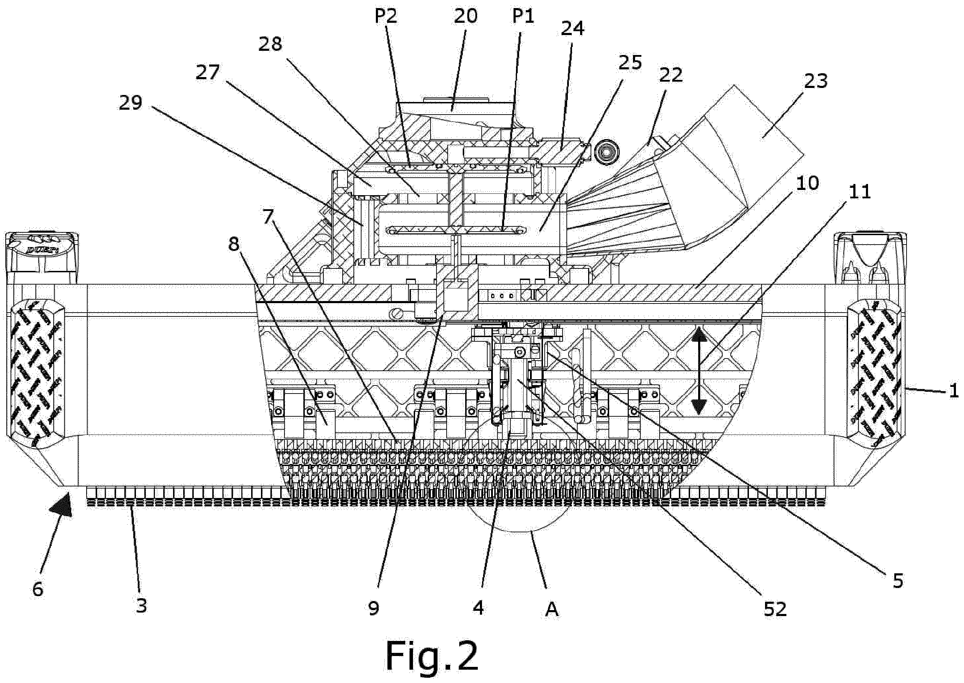

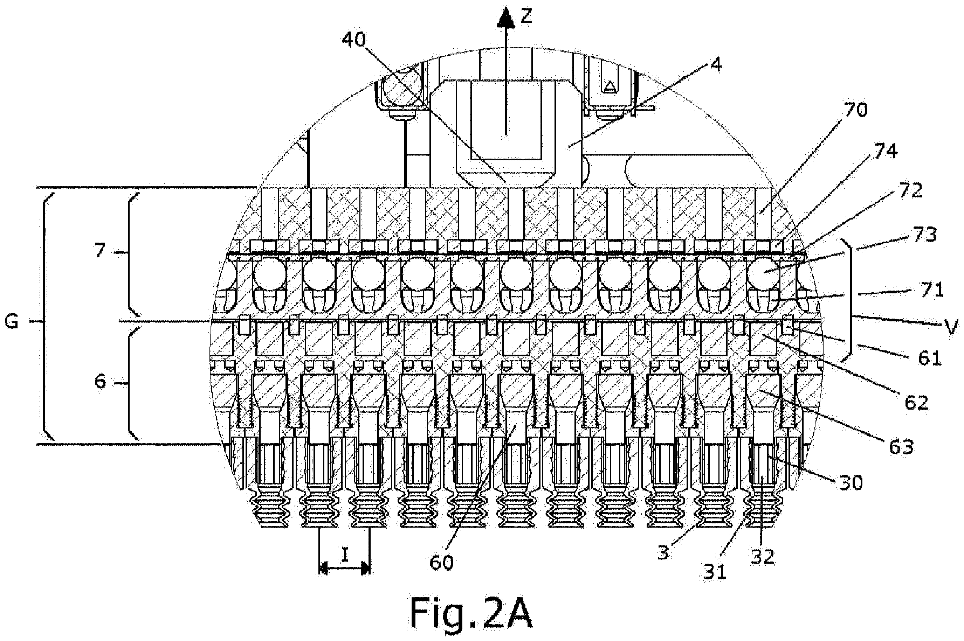

With reference to Fig. 1, the gripper (100) comprises a frame (1) having the shape of a parallelepiped box with an inner chamber (11), as shown in Fig. 2. A lid (10) shaped like a plate is mounted on the frame (1). A manifold (2) protrudes upwardly from the lid (10) in a central position with respect to the frame. A hub (20) is mounted on the manifold (2).

The hub (20) is suitable for being connected to a handling device, such as a manipulator or an anthropomorphic robot, of known type and therefore not illustrated herein. The handling device is suitable for moving the frame (1) from a picking-up position, wherein the gripper picks up an object, to a laying position, wherein the gripper lays the picked-up object.

An electrical connector (21) and a pneumatic connector (22) are connected to the lid (10). The electrical connector (21) is suitable for being connected to a control unit for powering and operating the electrical components of the gripper, as explained hereinafter. The pneumatic connector (22) is of multi-way type and is suitable for being connected to a compressed air source for supplying compressed air to various devices, as illustrated below.

An extraction conduit (23) and a by-pass conduit (24) are connected to the manifold (2). The extraction conduit (23) is suitable for being connected to an extraction source for creating a vacuum. The by-pass conduit (24) is connected with the external environment and comprises a one-way valve that allows an airflow from the outside to the inside of the manifold (2). The by-pass conduit (24) may comprise a cartridge that acts as filter and silencer. The by-pass conduit (24) is suitable for allowing the entrance of air in the chamber (11) of the frame from outside, if the chamber (11) is in a depression with respect to the external environment.

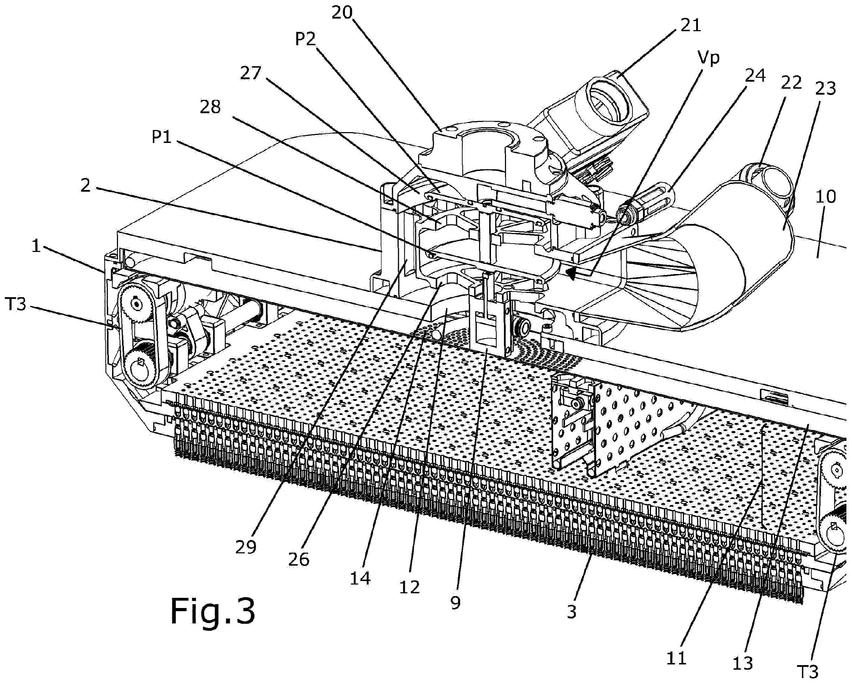

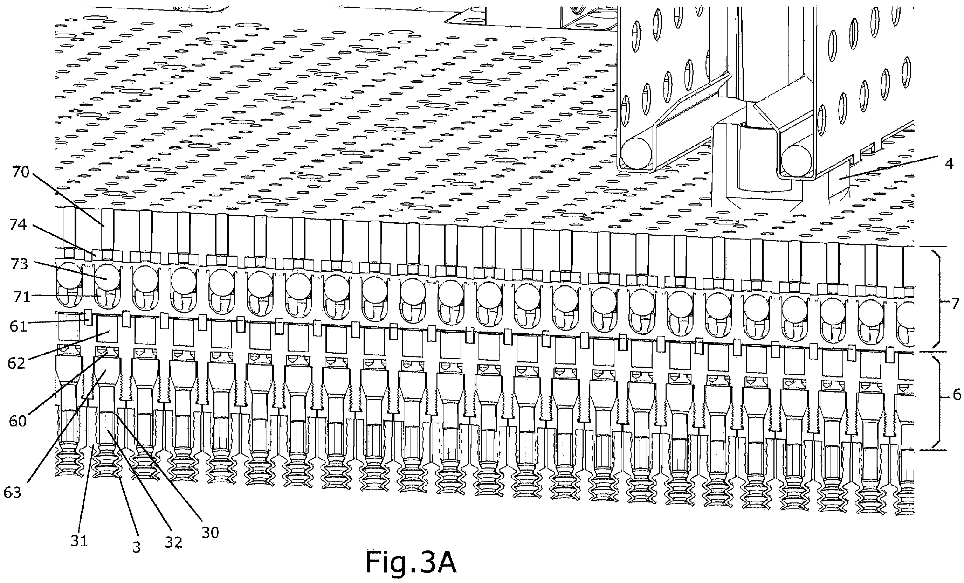

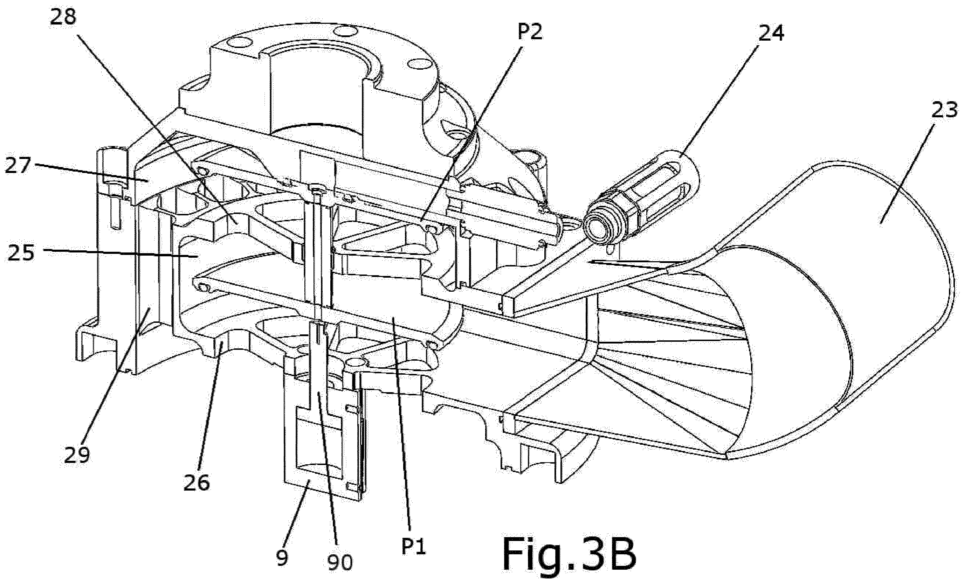

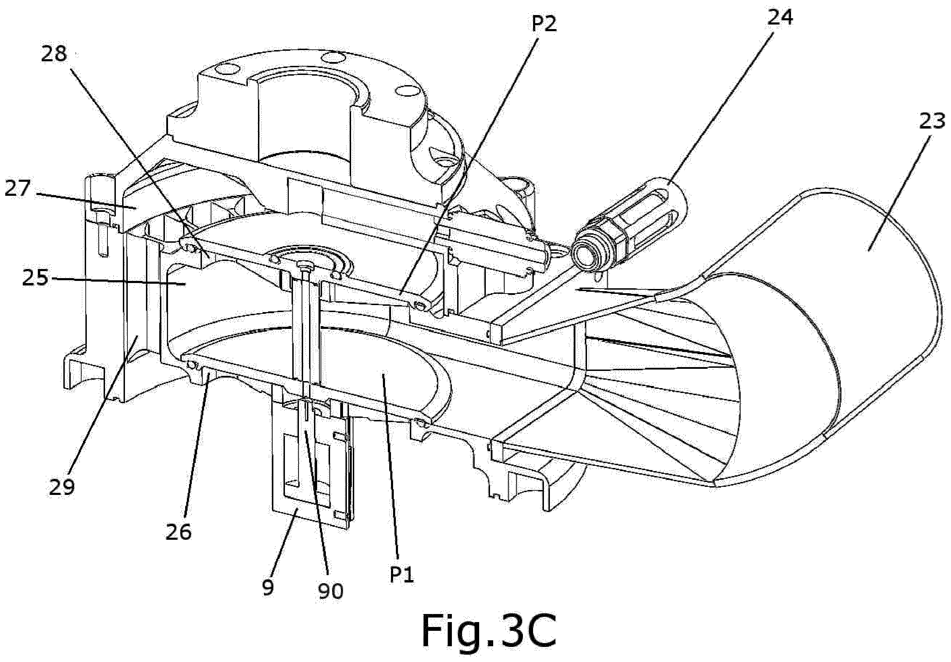

With reference to Figs. 2 and 3, the manifold (2) has a lower chamber (25) and an upper chamber (27). The lower chamber (25) is always in communication with the extraction conduit (23) for creating a vacuum.

The lower chamber (25) of the manifold comprises:
- a lower orifice (26) to communicate with the chamber (11) of the frame by means of a hole (12) of the lid; and
- an upper orifice (28) to communicate with the upper chamber (27).

The upper chamber (27) is always in communication with the hole (12) of the lid and therefore with the chamber (11) of the frame by means of a set of peripheral ducts (29).

A bracket (13) is disposed under the lid (10), said bracket (13) being provided with a central perforated portion (14) in correspondence of the hole (12) of the lid. The bracket (13) supports tubes for the passage of air.

With reference to Fig. 3, a main valve (Vp) is disposed in the manifold (22) to enable/disable a communication of the chamber (11) of the frame with the extraction conduit (23) connected to the extraction source for creating a vacuum in the chamber (11) of the frame.

The main valve (Vp) comprises a linear actuator (9) that has a stem (90) connected to a first dish (P1) and a second dish (P2) arranged in the lower chamber (25) and in the upper chamber (27) of the manifold, respectively. The dishes (P1, P2) are suitable for respectively closing the lower orifice (26) and the upper orifice (28) of the chambers of the manifold.

The linear actuator (9) may be a pneumatic cylinder actuated by one of the valves connected by means of the pneumatic manifold (22). The linear actuator (9) moves the two dishes (P1, P2), which are integral to each other, between two end positions.

With reference to Fig. 3B, when the stem (90) of the linear actuator is in extracted position, the dishes (P1, P2) do not close the lower and upper orifices (26, 27) of the lower chamber (25) of the manifold and therefore the chamber (11) of the frame is in communication with the lower chamber (25) of the manifold and with the extraction conduit (23). The by-pass conduit (24) is excluded, and the chamber (11) of the frame is in depression.

With reference to Fig. 3C, when the stem (90) of the linear actuator is in retracted position, the dishes (P1, P2) close the lower and upper orifices (26, 27) of the lower chamber (25) of the manifold and therefore the lower chamber (25) of the manifold is isolated from the chamber (11) of the frame.

The chamber (11) of the frame is in communication with the upper chamber (27) of the manifold by means of peripheral conduits (29). Since the by-pass conduit (24) is connected to the upper chamber (27), the chamber (11) of the frame is at atmospheric pressure outside the manifold (2). If, in such a configuration, compressed air is injected into the chamber (11) of the frame by means of a conduit of the pneumatic connector (22), the one-way valve of the by-pass conduit (24) is closed and the chamber (11) of the frame is in overpressure.

Referring again to Fig. 2, a lower plate (6) closes the frame (1) in lower position, acting as a bottom. The lower plate (6) supports a plurality of suction cups (3) that protrude inferiorly from the lower plate (6) for the picking up of objects. In the version shown of the figures, the suction cups (3) are disposed along the rows and the columns of an array.

With reference to Fig. 2A, the suction cups (3) are equally spaced and have a center distance (I). For illustrative purposes, a total of 4,408 suction cups with a diameter of approximately 5 mm can be provided. The suction cups are disposed in 76 columns and 58 rows with center distance 7.5 mm between two consecutive suction cups.

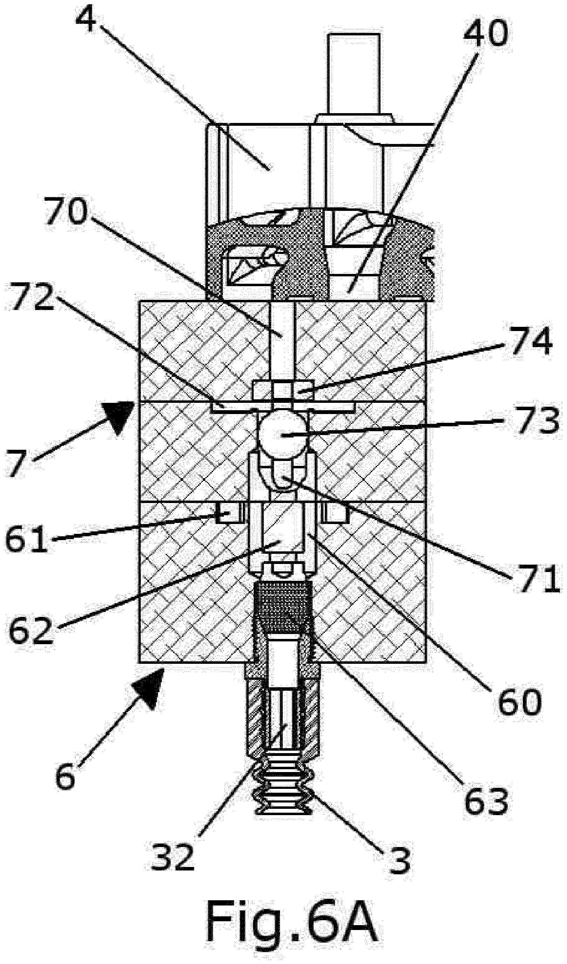

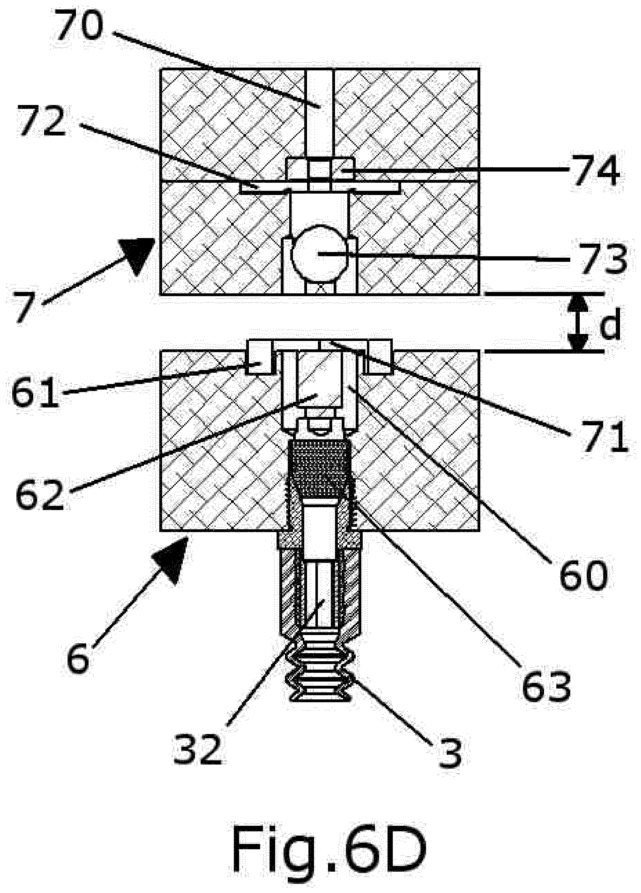

With reference to Fig. 2A, the lower plate (6) is fixed to the frame (1). An upper plate (7) is disposed in the chamber (11) above the lower plate (6). The upper plate (7) can translate vertically (i.e. in the direction of the Cartesian Z axis). The upper plate (7) can go from a lowered position (Fig. 6A), wherein it is in contact with the lower plate (6), to a raised position (Fig. 6D), wherein it is spaced from the lower plate (d) at a sufficient distance to exit from a magnetic attraction field, as illustrated below. For illustrative purposes, such a distance (d) can be higher than 3 mm, preferably 5 mm.

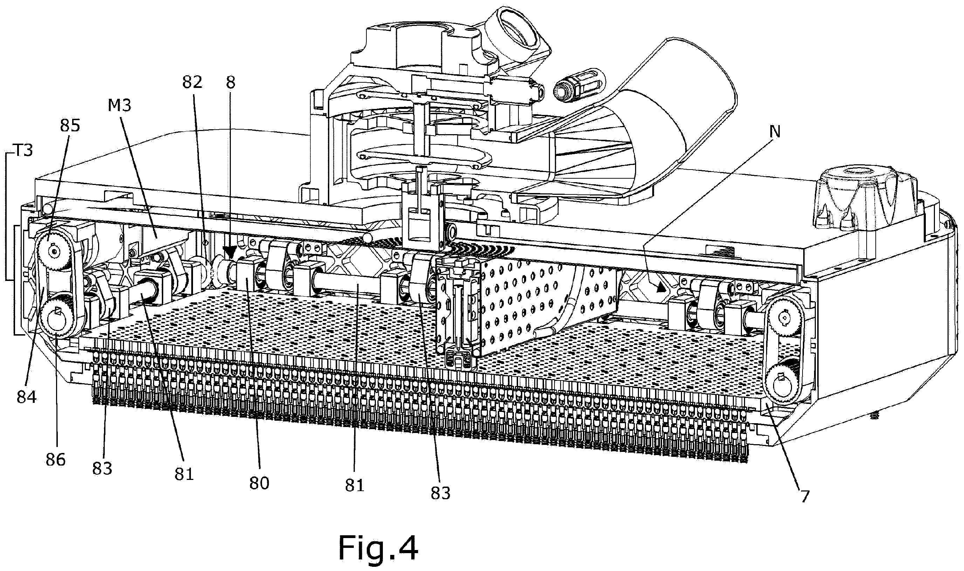

With reference to Figs. 2 and 4, moving means (8) are mounted in the chamber (11) of the frame to move the upper plate (7). The moving means (8) comprise block-shaped brackets (80) that are fixed along perimeter edges of the upper plate (7). Camshafts (81) are revolvingly mounted inside the brackets (80). Thus, four camshafts are provided (81); two shafts extend in the direction of the Cartesian X axis and other two shafts extend in the direction of the Cartesian Y axis.

A conical pinion (82) is mounted at the end of each camshaft and is coupled with the conical pinion of the other camshaft to transmit the motion between two shafts arranged in orthogonal position. In view of the above, the rotation of the four shafts is synchronized.

Cams (83) that protrude radially from the shafts are connected to connecting rods connected to the frame (1). The camshafts (81), which are arranged along the Cartesian Y axis, are rotated by respective electric motors (M3, M4) fixed to the frame (1) by means of transmissions (T3). The transmission (T3) may comprise a belt (84) that engages a pulley (85) integral with the engine shaft (M3 or M4) and a pulley (86) integral with the camshaft (81).

A rotation of the camshafts (81) results in a movement of the cams (83) that raise/lower the shafts (81) and consequently the upper plate (7) connected to the shafts by means of the brackets (80).

With reference to Fig. 2A, the upper plate (7) comprises a plurality of upper channels (70) that are open at the top and are arranged with axes coincident with the axes of the suction cups (3). The upper channels (70) are in communication with lower channels (71) that are open on the bottom.

The lower channels (71) have a higher diameter than the upper channels (70). An O-ring type seal (72) is disposed between the lower channel (71) and the upper channel (70). A shutter (73) of a valve (V) is disposed in the lower channel (1), said shutter (73) having a spherical or a cylindrical or a different shape. The shutter (73) is suitable for going in contact with the seal (72) so as to close the communication between the upper channel (70) and the lower channel (71).

An upper element (74) is disposed around each upper channel (70) above the lower channel (71). The upper element (74) can be a magnet or can be made of a ferromagnetic material. The upper element (74) can have a ring shape in such a way that the air can axially pass through the upper magnet.

The shutter (73) is made of ferromagnetic or magnetic material and is therefore attracted by the upper element (74), going in contact with the seal (72) in such a way to close the communication between the upper channel (70) and the lower channel (71).

The lower plate (6) has a plurality of channels (60) disposed in correspondence of the lower channels (71) of the lower plate. The suction cups (3) are mounted in a lower portion of the channels (60) of the lower plate. Each suction cup (3) has a shank (30) disposed in the lower portion of the channel (60) of the lower plate and a bellows (31) protruding inferiorly from the lower plate (6). The suction cup (3) is internally hollow and has a channel (32) that runs axially through the shank and the bellows.

Seal gaskets (61) are mounted on the upper surface of the lower plate (6) around the channels (60) in order to provide a seal between the upper plate and the lower plate. In fact, when the upper plate (7) abuts the lower plate (6), each lower channel (71) of the upper plate must communicate exclusively with the corresponding channel (60) of the lower plate and must remain isolated from all the other channels (60) of the lower plate (6).

A lower element (62) is mounted in an upper portion of each channel (60) of the lower plate. The lower element (62) is a magnet or is made of a ferromagnetic material and must be capable of attracting the shutter (73). The lower element (62) is perfectly fitted in the channel (60). The channel (60) has lateral passages to let the air pass laterally to the lower element (62).

The arrangement of the shutter relative to the upper and lower elements, and the magnetic attraction force between the shutter and the upper and lower elements are suitably chosen in such a way that:
- when the shutter (73) is attracted by the upper element (74), the magnetic field of the lower element (62) fails to attract the shutter;
- when the shutter (73) is attracted by the lower element (62), the magnetic field of the upper element (74) fails to attract the shutter

It must be noted that the shutter (73) works as the shutter of the valve (V). When the shutter is attracted by the upper element (74), the valve (V) is in the closed position and closes the communication between the chamber (11) in which the vacuum is created and the channel (32) of the suction cup. When the shutter is attracted by the lower element (62), the valve (V) is in the open position and opens the communication between the chamber (11) wherein the vacuum is created and the channel (32) of the suction cup, thus activating the suction cup.

A filter (63) is mounted in the channel (60) of the lower plate, under the lower element (62).

The shutters (73) of the valves (V) are normally in the closed position and are attracted by the upper elements (74) and therefore the suction cups (3) are not activated, i.e. they cannot be put in communication with the vacuum in the chamber (11). Moreover, a depression possibly created inside the chamber (11) of the frame would increase the thrust exerted on the seals (72) by all the shutters (73) that are in the closed position, thus increasing the seal (72).

An actuation device (4) is used to move an individual shutter (73) from the closed position to the open position in order to activate the suction cup.

With reference to Figs. 2 and 2A, the actuation device (4) is disposed in the chamber (11) of the frame above the upper plate (7) and is capable of operating the shutters (73) individually. The actuation device (4) may be a blowing head or an actuator having a pin-shaped stem that enters the channel (70) of the upper plate or an equivalent system suitable for moving the shutter (73) to the open position.

Advantageously, the actuation device (4) is a blowing head suitable for blowing compressed air through a nozzle (40) suitable for introducing compressed air into an upper channel (70) of the upper plate. The blowing head is pneumatically connected to a compressed air source by means of flexible hoses, which are part of the pneumatic connector (22).

The actuation device (4) is mounted on a plotter (5). For illustrative purposes, the plotter (5) can be of Cartesian type, so that it can move to any position on an X-Y plane, in order to reach any suction cup in the suction cup array.

With reference to Fig. 1, the plotter (5) comprises a bridge (50) that extends in the direction of the Cartesian Y axis. The bridge (50) is slidingly mounted on two slides (51a, 51b) that are integral with the frame (1) and extend in the direction of the Cartesian X axis, in such a way to translate in the direction of the X axis. A support (52) (Fig. 2) which supports the actuation device (4) is slidingly mounted on the bridge (50) in such a way to translate along the Cartesian Y axis.

The plotter (5) comprises two electric motors (M1, M2) fixed to the frame (1) and disposed proximate to the respective slides (51a, 51b). A single drive belt connects the two electric motors (M1, M2) directly to the actuation device (4). In this way, the motors (M1, M2) can impart displacements to the actuation device (4) along both the Cartesian Y axis and the Cartesian X axis. The transmissions can be belt transmissions or transmissions of a different type.

It must be considered that the actuating device (4) moves some shutters (73) to the open position, according to the suction cups (3) to be activated.

With reference to Fig. 4, the gripper (100) is provided with deactivation means (N) to simultaneously bring all the shutters (73) in the open position to the closed position, in such a way to deactivate all the activated suction cups at the same time.

In the embodiment shown in the Figures, the deactivation means (N) comprise moving means (8) to move the upper plate (7) away from the lower plate (6) in such a way that all of the shutters (73) are attracted by the upper elements (74) and return to the closed position.

However, according to a more generic embodiment, the gripper (100) comprises a plate assembly (G) (Fig. 2A) composed of one or more fixed plates wherein the suction cups (3) and the valves (V) provided with the shutters (73) are mounted. In such a case, the upper and lower elements (74, 62) are not necessary. The deactivation means (N) can be a plate of a magnetic or ferromagnetic material (not shown), which is arranged in the chamber (11) of the frame above the plate assembly (G) that simultaneously attracts all the shutters (73) to the closed position in such a way to deactivate all the suction cups simultaneously.

With reference to Figs. 6A - 6F, the operation of the gripper (100) is described.

With reference to Fig. 6A, initially the upper plate (7) sealingly abuts the lower plate (6) and the shutter (73) is attracted by the upper member (74). Therefore, the shutter (73) abuts the seal (72) and closes the communication between the upper channel (70) and the lower channel (71) of the upper plate. Therefore, the suction cup (3) is not activated because the shutter (73) closes the communication between the channel (32) of the suction cup and the upper conduit (70) of the upper plate that communicates with the chamber (11) of the frame wherein the vacuum is created.

The actuation device (4) is moved, it being actuated by the plotter (5) in order to position the nozzle (40) in correspondence of the upper channel (70) that corresponds to the suction cup (3) to be activated.

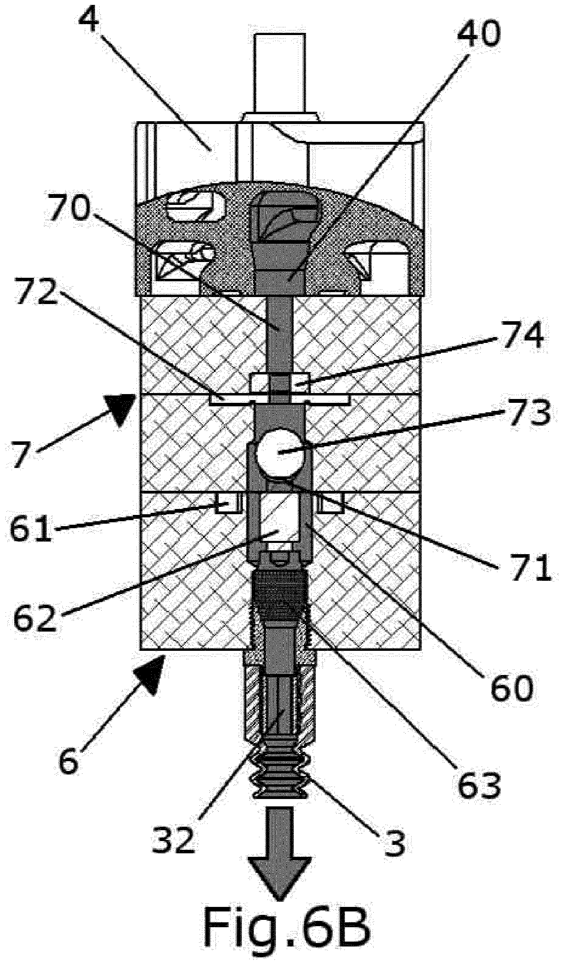

Fig. 6B shows the situation wherein the nozzle (40) of the blowing head is in the upper channel (70) of the upper plate. Compressed air is ejected from the nozzle (40), flows into the upper channel (70) and pushes down on the shutter (73), detaching the shutter (73) from the upper element (74) and bringing the shutter (73) closer to the lower element (62) which attracts the shutter (73). The compressed air passes through the lower channel (71) of the upper plate, in the channel (60) of the lower plate, peripherally to the lower element, through the filter (63), in the channel (32) of the suction cup and exits from the suction cup. As the air passes through, the filter (63) at the mouth of the suction cup (3) is cleaned of any impurities that may have been previously intercepted.

At this point, even if the airflow is interrupted, the shutter (73) is attracted by the lower element (62) and the communication between the upper channel (70) and the lower channel (71) of the upper plate is open. Therefore, communication is provided between the upper channel (70) and the channel (32) of the suction cup.

This procedure is to be repeated for all the suction cups to be activated, according to the shape of the part (I) to be picked up.

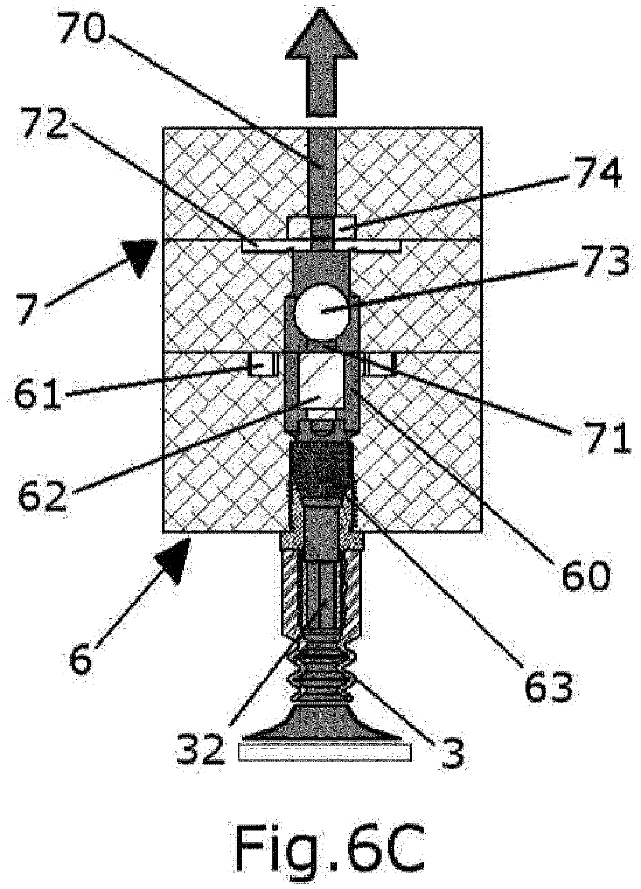

As already described, a vacuum is created in the chamber (11) of the frame through the main valve (Vp). With reference to Fig. 6C, the vacuum of the chamber (11) draws air from the channel (32) of the suction cup that is in communication with the upper channel (70) of the upper plate.

It should be noted that the extracted air flows in the channel (60) peripherally to the lower element (62) and in the lower channel (71) of the upper plate, peripherally to the shutter (73). As a result, such a peripheral airflow does not have the force to detach the shutter (73) from the lower element (62). Thus, the shutter (73) always remains in the open valve condition, ensuring that air is extracted to keep the suction cup (3) activated.

The part (I), which is attracted by the active suction cups (3), remains in the gripper and the gripper (100) is brought to the laying position wherein the part (I) is to be released.

By means of the main valve (Vp), the chamber (11) of the frame is brought back to the atmospheric pressure outside the collector and the part (I) is released. Eventually, in order to favor the release of the part (I) from the suction cups (3), an overpressure can be induced inside the chamber (11).

Once the part (I) has been released, the next picking-up cycle can be performed. If the new part has a different shape from the previous one and the activated suction cups are not completely contained within the perimeter of the new part, it is necessary to perform a general reset of the gripper (100), i.e. a deactivation of all activated suction cups. The deactivation means (N) are activated for this purpose. Specifically, the moving means (8) are operated to move the upper plate (7) away from the lower plate (6), as shown in Fig. 6D. Consequently, the shutter (73) is moved away from the lower element (62). When the upper plate (7) reaches a certain distance (d) from the lower plate (6), the shutter (73) is more attracted by the magnetic field of the upper element (74) than it is by the magnetic field of the lower element.

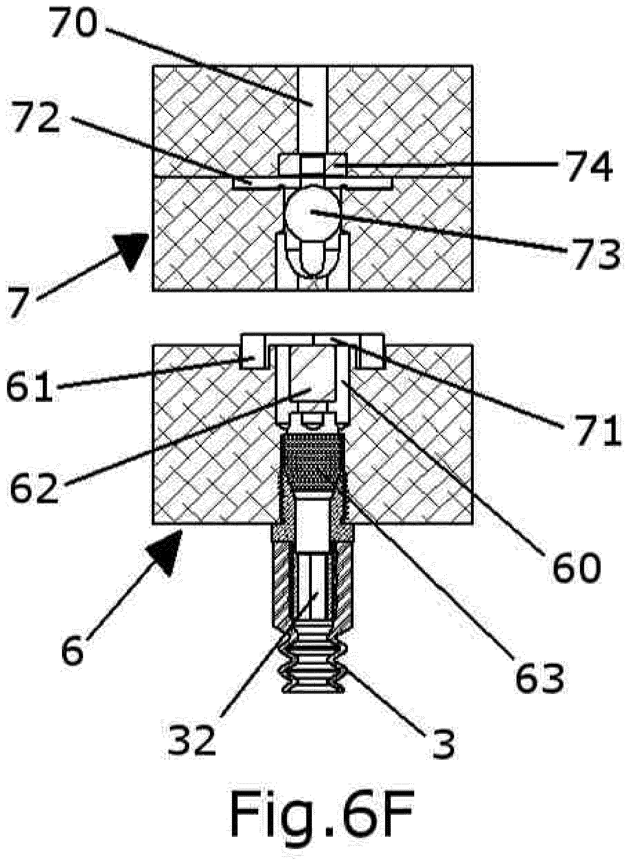

Consequently, as shown in Fig. 6F, the shutter (73) moves toward the upper element (74) and goes in contact with the seal (72), closing the communication between the upper channel (70) and the lower channel (71). Obviously, such a movement starts the reset of all the shutters (73) present in the various channels.

Without interrupting their motion, the moving means (8) move the upper plate (7), which is brought into contact with the lower plate (6), as shown in Fig. 6A. In such a situation, the shutter (73) closes the communication between the upper channel (70) and the lower channel (71).

The gripper (100) is suitable for the vacuum picking-up of objects of various shapes and sizes, made of a rigid or a flexible material, with at least one flat side for vacuum picking-up. The gripper (100) is suitable for the vacuum picking-up of parts directly from an original sheet or of parts that are otherwise arranged, without moving either the sheet or other objects close to the objects to be picked up and without moving either the objects to be picked up or the suction cups (3).

The gripper (100) can be installed in any automatic handling system (e.g. an anthropomorphic robot) to perform different tasks, such as picking up, handling, stacking or simple depositing of objects.

A large number of suction cups (3) can be individually activated to exactly replicate the desired shape and size.

The work cycle of the gripper comprises the following steps:
(A) actuating the plotter (5) to position the actuation device (4) in correspondence of the suction cup (3) to be activated, and activation of the suction cup (3) in such a way that the shutter (73) goes from the closing position to the opening position; repetition of step A for all the suction cups to be activated;
B) moving the gripper (100) to a pick-up position; such a movement can be performed simultaneously with the preceding step A;
C) opening of an extraction conduit (23) to generate a vacuum in the chamber (11) and operate the suction cups (3) that were activated during the preceding step A, which adhere to the part to be picked up,
B) moving the gripper (100) to a dropping position,
E) closing the extraction conduit (23) to interrupt the vacuum in the chamber (11),
F) moving the gripper from the parking position in such a way to drop the part.
G) if other parts with the same shape are to be picked up, the cycle returns to step B, otherwise the process continues with the following step,
H) if the new part to be picked up has a different shape compared to the previous part, but the activated suction cups are completely contained in a perimeter of the new part, the cycle can return to step A, otherwise the process continues with the following step,
I) actuation of the deactivation means (N) in such a way that all the shutters (73) of the activated suction cups return to the closing position, deactivating all the suction cups.

Optionally, either after or during the step E, the process may provide for a step E1 wherein compressed air is injected in the chamber (11) to induce a slight overpressure in such a way to favor/accelerate the detachment of the part from the suction cups.

Advantageously, the step (I) of actuating the deactivation means provides for moving the upper plate (7) away from the lower plate (6) and bringing the upper plate (7) back into contact with the lower plate (6).

## Claims

1. Vacuum gripper (100) for the selective picking-up of parts, comprising:
- a frame (1) that defines a chamber (11) in communication with a vacuum source;
- a plate assembly (G) wherein suction cups (3) are provided, in projecting position on the bottom of the plate assembly (G); each suction cup (3) having a channel (32) suitable for communicating with the chamber (11) of the frame in such a way to generate vacuum in the suction cup in order for the suction cup to operate,
- valves (V) provided in the plate assembly (G), each valve (V) having a shutter (73) in correspondence of each suction cup (3), which can be moved from a closing position, wherein it closes a communication between the chamber (11) of the frame and the channel (32) of the suction cup, deactivating the suction cup, to an opening position, wherein it opens the communication between the chamber (11) of the frame and the channel (32) of the suction cup, activating the suction cup,
- an actuation device (4) disposed above said plate assembly (G) suitable for individually actuating the shutter (73) from the closing position to the opening position to activate the desired suction cups,
- deactivation means (N) configured in such a way to simultaneously move all the shutters that are in open position to the closing position in such a way to simultaneously deactivate all the activated suction cups,
**characterized in that** it comprises
- a plotter (5) connected to said actuation device (4) to move said actuation device (4) to a desired position according to the suction cup to be activated.

2. The gripper (100) of claim 1, wherein said plate assembly (G) comprises:
- a lower plate (6) fixed to the frame (1) and having a plurality of channels (60) in correspondence of the suction cups (3),
- an upper plate (7) with an upper channel (70) in communication with a lower channel (71) in correspondence of each channel (60) of the lower plate; said upper plate (7) being movably mounted in the frame to go for a first stop position against the lower plate (6), wherein the lower channel of the upper plate communicates with the channel of the lower plate, to a second position spaced by a distance (d) from the lower plate,
- a lower element (62) made of a magnetic or ferromagnetic material, mounted in each channel (60) of the lower plate,
- an upper element (74) made of magnetic or ferromagnetic material, mounted between each lower channel (71) and each upper channel (70) of the upper plate, and
wherein said shutter (73) of each valve (V) is mounted in each lower channel (71) of the upper plate and is made of magnetic or ferromagnetic material in such a way to be attracted by the upper element and by the lower element and move from the closing position, wherein it is attracted by the upper element (74) and closes the communication between the upper channel (70) and the lower channel (71) to the opening position, wherein it is attracted by the lower element (62) and opens the upper channel (70) and the lower channel (71),
wherein said deactivation means (N) comprises moving means (8) to move said upper plate (7).

3. The gripper (100) of claim 1 or 2, wherein said actuation device (4) comprises a blowing head connected to a source of compressed air to blow an air jet towards a single shutter (73) and move it from the closing position to the opening position.

4. The gripper (100) of claim 2 or 3, comprising a seal gasket (72) disposed between each lower channel (71) and each upper channel (70) of the upper plate and configured in such a way that when the shutter (73) is stopped against said seal gasket (72), it closes the communication between the upper channel (70) and the lower channel (71) of the upper plate.

5. The gripper (100) of any one of claims 2 to 4, comprising a seal gasket (61) disposed on the lower plate (6) around each channel (60) of the lower plate configured in such a way that when the upper plate (7) is stopped against the lower plate (6), each lower channel (71) of the upper plate is in communication with the corresponding channel (60) of the lower plate.

6. The gripper (100) of any one of claims 2 to 5, comprising a filter (63) disposed in each channel (60) of the lower plate between the lower element (62) and the suction cup (3).

7. The gripper (100) of any one of claims 2 to 6, wherein the lower element (63) is configured in such a way to permit an air flow in the channel (60) of the lower plate in peripheral position with respect to the lower element.

8. The gripper (100) of any one of claims 2 to 7, wherein the lower element (75) is configured in such a way to permit an air flow that axially passes through the lower element.

9. The gripper (100) of any one of claims 2 to 8, wherein said moving means (8) of the upper plate actuate cam shafts (81) fixed to perimeter edges of the upper plate (7) moved by at least one electric motor (M3, M4).

10. The gripper (100) of any one of the preceding claims, wherein said plotter (5) comprises:
- a bridge (50) that is slidingly mounted on slides (51a, 51b) fixed to the frame,
- a support (52) that supports the actuation means (4) that is slidingly mounted on said bridge (50), and
- two electric motors (M1, M2) that move the bridge (50) with respect to the slides (51a, 51b) and the support (52) with respect to the bridge (50).

11. The gripper (100) of any one of the preceding claims, comprising a pneumatic connector (22) in communication with a source of compressed air and with said chamber (11) of the frame to put the chamber (11) in overpressure.

12. Method for selectively picking up parts with gripper (100) according to any one of the preceding claims, comprising the following steps:
A) actuating the plotter (5) to position the actuation device (4) in correspondence of the suction cup (3) to be activated, and activation of the suction cup (3) in such a way that the shutter (73) goes from the closing position to the opening position; repetition of step A for all the suction cups to be activated;
B) moving the gripper (100) to a pick-up position;
C) opening of an extraction conduit (23) to put the chamber (11) of the frame in vacuum condition and operate the suction cups (3) that have been activated and are adhered by the part to be picked,
B) moving the gripper (100) to a parking position,
E) closing the extraction conduit (23) to interrupt the vacuum in the chamber (11) of the frame,
F) moving the gripper from the parking position in such a way to drop the part.
G) if other parts with the same shape are to be picked, the cycle returns to step B, otherwise the process continues with the following step,
H) if the new part to be picked up has a different shape, and the activated suction cups are completely contained in a perimeter of the new part, the cycle returns to step A, otherwise the process continues with the following step,
I) actuation of the deactivation means (N) in such a way that simultaneously all the shutters (73) of the valves in correspondence of the activated suction cups return to the closing position, deactivating all the suction cups.

## Patentansprüche

1. Vakuumgreifer (100) zum selektiven Aufnehmen von Teilen, umfassend:
- einen Rahmen (1), der eine Kammer (11) definiert, die in mit einer Vakuumquelle in Verbindung steht;
- eine Plattenanordnung (G), in der Saugnäpfe (3) angeordnet sind, die unten aus dem Boden der Plattenanordnung (G) vorstehen; wobei jeder Saugnapf (3) eine Rinne (32) aufweist, die dazu bestimmt ist, mit der Kammer (11) des Rahmens so in Verbindung zu stehen, dass ein Vakuum in dem Saugnapf erzeugt wird, damit der Saugnapf funktioniert,
- Ventile (V), die in der Plattenanordnung (G) angeordnet sind, wobei jedes Ventil (V) einen Schieber (73) in Übereinstimmung mit jedem Saugnapf (3) aufweist, der aus einer Schießstellung, in der er eine Verbindung zwischen der Kammer (11) des Rahmens und der Rinne (32) des Saugnapfes schließt und den Saugnapf deaktiviert, in eine Offenstellung gebracht werden kann, in der er die Verbindung zwischen der Kammer (11) des Rahmens und der Rinne (32) des Saugnapfes öffnet und den Saugnapf aktiviert,
- eine Betätigungsvorrichtung (4), die oberhalb der Plattenanordnung (G) angeordnet ist und dazu bestimmt ist, den Schieber (73) einzeln aus der Schließstellung in die Offenstellung zu betätigen, um die gewünschten Saugnäpfe zu aktivieren, und
- Deaktivierungsmittel (N), die ausgebildet sind, um alle Schieber, die sich in der Offenstellung befinden, gleichzeitig in Schließstellung zu bringen, derart, dass alle aktivierten Saugnäpfe gleichzeitig deaktiviert werden,
**dadurch gekennzeichnet, dass** er Folgendes umfasst
einen Plotter (5), der mit der Betätigungsvorrichtung (4) verbunden ist, um die Betätigungsvorrichtung (4) in eine gewünschte Stellung zu bringen, je nachdem, welcher Saugnapf aktiviert werden soll.

2. Greifer (100) nach Anspruch 1, wobei die Plattenanordnung (G) Folgendes umfasst:
- eine untere Platte (6), die an dem Rahmen (1) befestigt ist und eine Vielzahl von Rinnen (60) in Übereinstimmung mit den Saugnäpfen (3) aufweist,
- eine obere Platte (7) mit einer oberen Rinne (70), die mit einer unteren Rinne (71) in Übereinstimmung mit jeder Rinne (60) der unteren Platte in Verbindung steht; wobei die obere Platte (7) beweglich in den Rahmen eingebaut ist, um aus einer ersten Stellung im Anschlag gegen die untere Platte (6), in der die untere Rinne der oberen Platte mit der Rinne der unteren Platte in Verbindung steht, in eine zweite Stellung überzugehen, die in einem Abstand (d) von der unteren Platte beabstandet ist,
- ein unteres Element (62) aus einem magnetischen oder ferromagnetischen Material, das in jeder Rinne (60) der unteren Platte eingebaut ist,
- ein oberes Element (74) aus einem magnetischen oder ferromagnetischen Material, das zwischen jeder unteren Rinne (71) und jeder oberen Rinne (70) der unteren Platte eingebaut ist, und
wobei der Schieber (73) einen jeden Ventils (V) in jeder unteren Rinne (71) der oberen Platte eingebaut ist und aus einem magnetischen oder ferromagnetischen Material besteht, derart, dass er von dem oberen Element und von dem unteren Element angezogen wird und sich aus der Schließstellung, in der er von dem oberen Element (74) angezogen wird und die Verbindung zwischen der oberen Rinne (70) und der unteren Rinne (71) schließt, in die Offenstellung bewegt, in der er von dem unteren Element (62) angezogen wird und die obere Rinne (70) und die untere Rinne (71) öffnet,
wobei die Deaktivierungsmittel (N) Bewegungsmittel (8) umfassen, um die obere Platte (7) zu bewegen.

3. Greifer (100) nach Anspruch 1 oder 2, wobei die Betätigungsvorrichtung (4) einen Blaskopf umfasst, der mit einer Druckluftquelle verbunden ist, um einen Luftstrahl in Richtung eines einzelnen Schiebers (73) zu blasen und ihn aus der Schließstellung in die Offenstellung zu bringen.

4. Greifer (100) nach Anspruch 2 oder 3, umfassend eine Dichtung (72), die zwischen jeder unteren Rinne (71) und jeder oberen Rinne (70) der oberen Platte angeordnet ist und so ausgestaltet ist, dass wenn der Schieber (73) gegen die Dichtung (72) in Anschlag geht, die Verbindung zwischen der oberen Rinne (70) und der unteren Rinne (71) der oberen Platte geschlossen wird.

5. Greifer (100) nach Anspruch 2 bis 4, umfassend eine Dichtung (61), die auf der unteren Platte (6) um jede Rinne (60) der unteren Platte herum angeordnet ist und so ausgebildet ist, dass wenn die obere Platte (7) gegen die untere Platte (6) in Anschlag geht, jede untere Rinne (71) der oberen Platte mit der entsprechenden Rinne (60) der unteren Platte in Verbindung steht.

6. Greifer (100) nach einem der Ansprüche 2 bis 5, umfassend einen Filter (63), der in jeder Rinne (60) der unteren Platte zwischen dem unteren Element (62) und dem Saugnapf (3) angeordnet ist.

7. Greifer (100) nach einem der Ansprüche 2 bis 6, wobei das untere Element (63) so ausgebildet ist, dass ein Luftstrom in der Rinne (60) der unteren Platte in peripherer Stellung in Bezug auf das untere Element erlaubt wird.

8. Greifer (100) nach einem der Ansprüche 2 bis 7, wobei das untere Element (75) so ausgebildet ist, dass ein Luftstrom erlaubt wird, der das untere Element axial durchquert.

9. Greifer (100) nach einem der Ansprüche 2 bis 8, wobei die Bewegungsmittel (8) der oberen Platte Nockenwellen (81) betätigen, die an den umlaufenden Rändern der oberen Platte (7) befestigt sind und von mindestens einem Elektromotor (M3, M4) bewegt werden.

10. Greifer (100) nach einem der vorstehenden Ansprüche, wobei der Plotter (5) umfasst:
- eine Brücke (50), die auf Führungen (51a, 51b), die an dem Rahmen befestigt sind, gleitbeweglich eingebaut ist,
- einen Träger (52), der die Betätigungsmittel (4) trägt, die auf der Brücke (50) gleitbeweglich eingebaut sind, und
- zwei Elektromotoren (M1, M2), die die Brücke (50) in Bezug auf die Führungen (51a, 51b) und den Träger (52) in Bezug auf die Brücke (50) bewegen.

11. Greifer (100) nach einem der vorstehenden Ansprüche, umfassend einen pneumatischen Verbinder (22), der mit einer Druckluftquelle und mit der Kammer (11) des Rahmens in Verbindung steht, um die Kammer (11) unter Überdruck zu setzen.

12. Verfahren zum selektiven Aufnehmen von Teilen von einem Greifer (100) nach einem der vorstehenden Ansprüche, umfassend die folgenden Schritte:
A) Betätigen des Plotters (5), um die Betätigungsvorrichtung (4) in Übereinstimmung mit dem zu aktivierenden Saugnapf (3) zu bringen, und Aktivieren des Saugnapfes (3) derart, dass der Schieber (73) aus der Schließstellung in die Offenstellung übergeht; Wiederholung des Schrittes A für alle zu aktivierenden Saugnäpfe;
B) Bewegen des Greifers (100) in eine Aufnehmstellung;
C) Öffnen einer Saugleitung (23), um die Kammer (11) des Rahmens in den Vakuumzustand zu versetzen und die Saugnäpfe (3), die aktiviert wurden und an dem aufzunehmenden Objekt anliegen, in Funktion zu setzen,
D) Verschieben des Greifers (100) in eine Ablegestellung,
E) Schließen der Saugleitung (23), um das Vakuum in der Kammer (11) des Rahmens zu unterbrechen,
F) Bewegen des Greifers aus der Ablegestellung, derart, dass das Teil losgelassen wird,
G) wenn weitere Teile derselben Form aufgenommen werden sollen, kehrt der Zyklus zum Schritt B zurück, andernfalls wird das Verfahren mit dem folgenden Schritt fortgesetzt,
H) wenn das neue, aufzunehmende Teil eine andere Form als das vorherige aufweist, die bereits aktivierten Saugnäpfe aber vollständig innerhalb eines Umrisses des neuen Teils eingeschrieben sind, kehrt der Zyklus zum Schritt A zurück, andernfalls wird das Verfahren mit dem folgenden Schritt fortgesetzt,
I) Betätigen der Deaktivierungsmittel (N), derart, dass alle Schieber (73) der Ventile in Übereinstimmung mit den aktivierten Saugnäpfen gleichzeitig in die Schließstellung zurückkehren und dabei alle Saugnäpfe deaktivieren.

## Revendications

1. Préhenseur (100) à vide pour la prise sélective d'objets comprenant :
- un châssis (1) qui définit une chambre (11) en communication avec une source de vide ;
- un groupe plaques (G) sur lequel sont disposées des ventouses (3) qui débordent inférieurement du groupe plaques (G) ; chaque ventouse (3) ayant un canal (32) destiné à communiquer avec la chambre (11) du châssis de manière à générer le vide dans la ventouse pour la rendre opérationnelle,
- des vannes (V) disposées dans le groupe plaques (G), chaque vanne (V) ayant un obturateur (73) en correspondance de chaque ventouse (3) qui peut se déplacer d'une position de fermeture où elle ferme une communication entre la chambre (11) du châssis et le canal (32) de la ventouse en désactivant la ventouse à une position d'ouverture où elle ouvre la communication entre la chambre (11) du châssis et le canal (32) de la ventouse en activant la ventouse,
- un dispositif d'activation (4) disposé au-dessus du dit groupe plaques (G) apte à activer individuellement l'obturateur (73) de la position de fermeture à la position d'ouverture pour activer les ventouses souhaitées,
- des moyens de désactivation (N) configurés de manière à déplacer simultanément tous les obturateurs qui sont en position ouverte vers la position fermée de manière à désactiver simultanément toutes les ventouses actives,
**caractérisé en ce qu'**il comprend
un traceur (5) branché au dit dispositif d'activation (4) pour le déplacer sur une position souhaitée conformément à la ventouse à activer.

2. Préhenseur (100) selon la revendication 1, où ledit groupe plaques (G) comprend :
- une plaque inférieure (6) fixée au châssis (1) et ayant une pluralité de canaux (60) en correspondance des ventouses (3),
- une plaque supérieure (7) ayant un canal supérieur (70) en communication avec un canal inférieur (71) en correspondance de chaque canal (60) de la plaque inférieure ; ladite plaque supérieure (7) étant montée mobile dans le châssis pour passer d'une première position en butée sur la plaque inférieure (6), où le canal inférieur de la plaque supérieure est en communication avec le canal de la plaque inférieure, à une seconde position éloignée d'une distance (d) de la plaque inférieure,
- un élément inférieur (62), réalisé en un matériau aimanté ou ferromagnétique, monté dans chaque canal (60) de la plaque inférieure,
- un élément supérieur (74), réalisé en un matériau aimanté ou ferromagnétique, monté entre chaque canal inférieur (71) et chaque canal supérieur (70) de la plaque supérieur et
où ledit obturateur (73) de chaque vanne (V) est monté dans chaque canal inférieur (71) de la plaque supérieure et est réalisé en matériau aimanté ou ferromagnétique de manière à être attiré par l'élément supérieur et par l'élément inférieur et se déplacer de la position de fermeture, où il est attiré par l'élément supérieur (74) et ferme la communication entre le canal supérieur (70) et le canal inférieur (71), à la position d'ouverture, où il est attiré par l'élément inférieur (62) et ouvre le canal supérieur (70) et le canal inférieur (71),
où lesdits moyens de désactivation (N) comprennent des moyens de déplacement (8) pour déplacer ladite plaque supérieure (7).

3. Préhenseur (100) selon la revendication 1 ou 2, où ledit dispositif d'activation (4) comprend une tête de ventilation connectée à une source d'air comprimé pour souffler un jet d'air vers un obturateur individuel (73) pour le déplacer de la position de fermeture à la position d'ouverture.

4. Préhenseur (100) selon la revendication 2 ou 3, comprenant une étanchéité (72) disposée entre chaque canal inférieur (71) et chaque canal supérieur (70) de la plaque supérieure et conformée de façon à ce que lorsque l'obturateur (73) va en butée sur ladite étanchéité (72), il ferme la communication entre le canal supérieur (70) et le canal inférieur (71) de la plaque supérieure.

5. Préhenseur (100) selon l'une quelconque des revendications de 2 à 4, comprenant une étanchéité (61) disposée sur la plaque inférieure (6) autour de chaque canal (60) de la plaque inférieure, configurée de sorte que lorsque la plaque supérieure (7) est en butée sur la plaque inférieure (6), chaque canal inférieur (71) de la plaque supérieure est en communication avec le respectif canal (60) de la plaque inférieure.

6. Préhenseur (100) selon l'une quelconque des revendications de 2 à 5, comprenant un filtre (63) disposé dans chaque canal (60) de la plaque inférieure entre l'élément inférieur (62) et la ventouse (3).

7. Préhenseur (100) selon l'une quelconque des revendications de 2 à 6, où l'élément inférieur (63) est conformé de manière à faire passer un flux d'air dans le canal (60) de la plaque inférieure, en position périphérique par rapport à l'élément inférieur.

8. Préhenseur (100) selon l'une quelconque des revendications de 2 à 7, où l'élément inférieur (75) est conformé de manière à faire passer un flux d'air qui traverse axialement l'élément inférieur.

9. Préhenseur (100) selon l'une quelconque des revendications de 2 à 8, où lesdits moyens de déplacement (8) de la plaque supérieure actionnent des arbres à came (81), fixés sur les bords périmétriques de la plaque supérieure (7), déplacés par au moins un moteur électrique (M3, M4).

10. Préhenseur (100) selon l'une quelconque des revendications précédentes, où ledit traceur (5) comprend :
- un pont (50) monté coulissant sur des glissières (51a, 51b) fixées au châssis,
- un support (52) qui soutient les moyens d'activation (4), monté coulissant sur ledit pont (50), et
- deux moteurs électriques (M1, M2) qui déplacent le pont (50) par rapport aux glissières (51a, 51b) et le support par rapport au pont (50).

11. Préhenseur (100) selon l'une quelconque des revendications précédentes, comprenant un connecteur pneumatique (22) en communication avec une source d'air comprimé et avec ladite chambre (11) du châssis pour mettre la chambre (11) en surpression.

12. Méthode pour la préhension sélective d'objets à l'aide d'un préhenseur (100) selon l'une quelconque des revendications précédentes, comprenant les étapes suivantes :
A) activation du traceur (5) pour positionner le dispositif d'activation (4) en correspondance de la ventouse (3) à activer et activation de la ventouse (3) de manière que l'obturateur (73) passe de la position de fermeture à la position d'ouverture ; répétition de l'étape A pour toutes les ventouses à activer;
B) déplacement du préhenseur (100) sur une position de prélèvement ;
C) ouverture d'un conduit d'aspiration (23) pour mettre sous vide la chambre (11) du châssis et rendre opérationnelles les ventouses (3) qui ont été activées et qui font prise sur l'objet à prélever,
D) déplacement du préhenseur (100) sur une position de veille,
F) déplacement du préhenseur de la position de veille de manière à laisser tomber la pièce,
G) si d'autres pièces ayant la même forme doivent être prélevées, le cycle se rétablit à l'étape B, sinon il passe à l'étape suivante,
H) si la nouvelle pièce qui doit être prélevée a une forme différente de celle précédente, mais les ventouses déjà activées sont entièrement contenues à l'intérieur d'un périmètre de la nouvelle pièce, le cycle se rétablit à l'étape A, sinon il passe à l'étape suivante,
I) activation des moyens de désactivation (N) de manière que, simultanément, tous les obturateurs (73) des vannes en correspondance des ventouses activées se rétablissent sur la position de fermeture, en désactivant les ventouses.
